Europäisches Patentamt

European Patent Office    (11) Numéro de publication: **0 267 131**

Office européen des brevets    **A1**

(12) **DEMANDE DE BREVET EUROPEEN**

(21) Numéro de dépôt: 87420295.5    (51) Int. Cl.⁴: **B 26 D 3/28**
                                              // A22C25/17, A22B5/20

(22) Date de dépôt: 29.10.87

(30) Priorité: 31.10.86 FR 8615764

(43) Date de publication de la demande:
11.05.88   Bulletin   88/19

(84) Etats contractants désignés:
AT BE CH DE ES FR GB GR IT LI LU NL SE

(71) Demandeur: **UNION FINANCIERE POUR LE
DEVELOPPEMENT DE L'ECONOMIE
CEREALIERE-UNIGRAINS (Société Anonyme de droit
français)**
**8, avenue du Président Wilson**
**F-75016 Paris  (FR)**

(72) Inventeur: **Romand, Paul**
**La Batie Besayes**
**F-26300 Bourg de Peage  (FR)**

**Payart, Francis**
**6 boulevard Joseph Vallier**
**F-38000 Grenoble  (FR)**

(74) Mandataire: **Wind, Jacques et al**
**Cabinet Germain et Maureau BP 3011**
**F-69392 Lyon Cédex 03  (FR)**

(54) **Outil de coupe ou de polissage apte à se conformer au profil d'une section droite.**

(57)  Outil de coupe ou de polissage apte à se conformer au profil d'une section droite, par exemple lame de coupe déformable (18) destinée à l'enlèvement de la bardière sur les longes de porc.

La lame (18) est déformée par des guides-supports (361,362,363,...) se déplaçant selon des directions (37) orthogonales à la lame (18). La lame est tendue par le châssis support de lame (25), qui descend sous l'action de son propre poids et d'un ressort (39). Les patins (36) suivent un déplacement qui leur est commandé par des détecteurs de l'interface maigre-gras.

FIG.3

**Description**

**"Outil de coupe ou de polissage apte à se conformer au profil d'une section droite"**

La présente invention se rapporte à un outil de coupe ou de polissage apte à se conformer au profil d'une section droite, et plus particulièrement à une lame de coupe déformable destinée à l'enlèvement de la bardière sur les longes de porc.

La découpe des pièces de viande est de plus en plus, à l'heure actuelle, réalisée par des machines automatiques. Si l'on considère le cas de la découpe d'un "rein brut" de porc, une des premières opérations consiste à séparer la "bardière" de la "longe". Par rein brut, entend la partie du porc formée par la longe, qui est une partie maigre, et la bardière, qui est constituée par la couenne et le gras. Dans les machines connues, le rein brut est déplacé dans un carter en forme de gouttière d'un quart de cercle pour préformer la pièce au profil correspondant de la lame de coupe, que la pièce atteint en sortant du carter. La position de la lame détermine l'épaisseur, théoriquement constante, de bardière enlevée, cette épaisseur étant déterminée avant la découpe par une mesure pratiquée sur l'une des pièces d'un même lot. Cette manière de procéder présente l'inconvénient de ne pas tenir compte du profil exact de l'interface entre le "maigre" et le "gras" de la pièce de viande, de sorte qu'il en résulte inévitablement un enlèvement de maigre avec la bardière ainsi qu'un reste de gras sur la longe.

L'invention a pour objet un outil de coupe ou de polissge qui soit apte à se conformer, de préférence automatiquement, au profil d'une section droite. Dans le cas, par exemple, de l'enlèvement de la bardière sur les longes de porc, cet outil est une lame déformable qui se conforme automatiquement au profil de la longe. Cet outil est du type comportant un organe de coupe ou polissage longiligne et souple, tel qu'un ruban ou un fil, et il est caractérisé en ce que cet organe longiligne et souple est tenu par au moins un guide-support, dont la position est réglable dans le plan de la section droite considérée et dans une direction sensiblement normale au profil de cette section, et est déterminée par un organe de commande, cet organe longiligne étant libre de se déplacer pour suivre et compenser les déplacements éventuels du ou des guides-supports.

Dans le cas de la coupe, l'organe longiligne peut être un fil chauffant ou une lame souple avec un bord tranchant éventuellement animé d'oscillations transversales ou longitudinales par rapport à l'axe de la lame. Dans ce dernier cas, les oscillations longitudinales sont avantageusement produites par deux supports d'extrémité, au moins un de ces supports étant mobile dans une direction pour exercer une force de tension sur la lame.

Dans le cas de l'application de l'invention à l'enlèvement de la bardière, l'outil de coupe est avantageusement agencé pour enlever simultanément la bardière sur deux reins bruts d'un même porc, respectivement droit et gauche, la lame de coupe ayant une allure générale de demi-cercle dont chaque moitié est destinée à l'enlèvement de la bardière de l'un des reins bruts. Dans ce cas, selon une forme de réalisation avantageuse, chaque extrémité de la lame est engagée sur l'un de deux manchons, vibrant en opposition de phase l'un par rapport à l'autre et portés par un même support mobile verticalement et rappelé vers le bas par son propre poids. Le profil exact de la lame est donné par plusiers guides-supports qui sont chacun associés à un organe de commande de prépositionnement, avantageusement par galet presseur, et au moins un d'entre eux est en outre associé à un organe de commande de positionnement par détection de l'interface maigre-gras.

L'invention est aussi applicable à l'enlèvement de la bardière soit d'un seul rein brut de porc, soit de plus de deux reins bruts de porc. Dans ces cas également, chaque extrémité de la lame est engagée sur l'un de deux manchons, vibrant en opposition de phase l'un par rapport à l'autre et portés par un même support mobile verticalement et rappelé vers le bas par son propre poids. Le profil exact de la lame est donné par plusieurs guides-supports qui sont chacun associés à un organe de commande de prépositionnement, avantageusement par galet presseur, et au moins un d'entre eux est en outre associé à un organe de commande de positionnement par détection de l'interface maigre-gras.

L'organe longiligne, peut aussi être un organe sans-fin, par exemple une lame sans-fin. Dans ce cas, la lame passe autour d'au moins un tambour, ou poulie de renvoi, Si ce tambour, ou poulie, est unique, il sert aussi de dispositif rotatif d'entraînement de la lame. Il est de toutes façons libre de se déplacer, par exemple verticalement sous l'effet de son propre poids, pour tendre la lame de coupe et lui permettre ainsi de suivre et compenser les déplacements éventuels du ou des guides-supports.

De tout façon, l'invention sera bien comprise, et ses avantages ainsi que d'autres caractéristiques ressortiront, au cours de la description suivante d'un exemple non limitatif de réalisation, en référence aux dessins schématiques annexés dans lesquels :

Figure 1 est une vue latérale partielle d'une installation d'enlèvement automatique de la bardière de reins bruts de porcs équipée d'un outil de coupe selon l'invention, l'installation n'étant pas alimentée en viande ;

Figure 2 montre, en coupe transversale partielle selon IIa-IIa de la figure 1 pour la moitié gauche et en coupe transversale partielle selon IIb-IIb de la figure 1 pour la moitié droite, cette installation avant puis pendant la découpe de la bardière des deux reins bruts d'un même porc ;

Figure 3 est une représentation schématique du dispositifs d'entraînement et de tension de la lame de coupe ;

Figure 4 est une représentation schématique d'un des dispositif de positionnement des guides-supports.

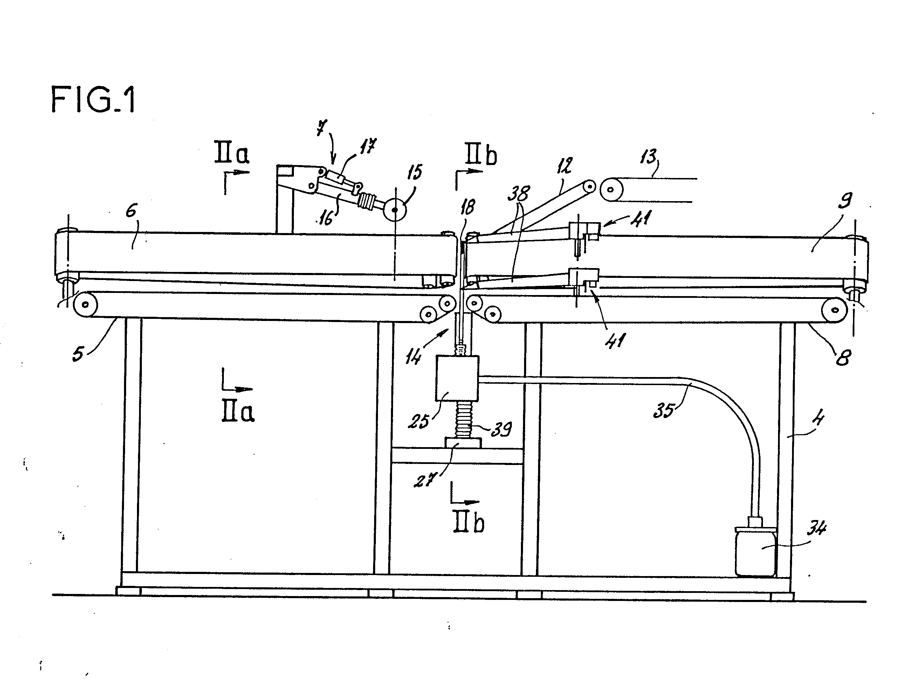

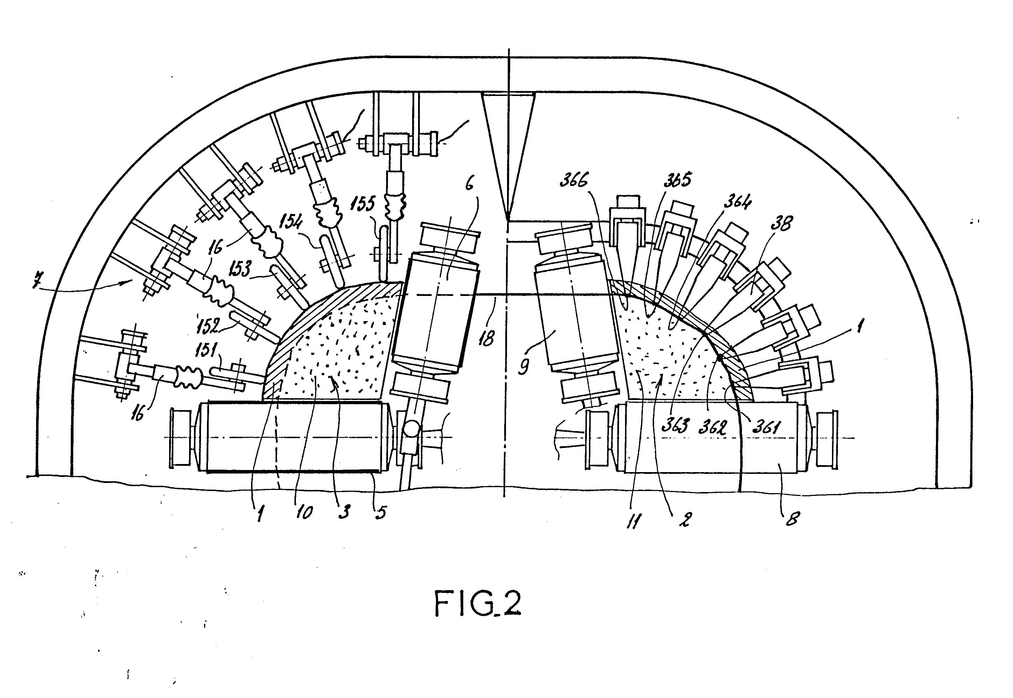

En se reportant tout d'abord aux figures 1 et 2, la machine est agencée pour enlever simultanément la bardière 1 de deux reins bruts 2,3, respectivement droit et gauche d'une même porc. Elle est essentiellement constituée d'un châssis tubulaire 4 supportant des convoyeurs à tapis sans fin 5,6 d'amenée des reins bruts, des dispositifs 7 de contention des reins bruts, des convoyeurs à tapis sans fin 8,9 d'évacuation des deux longes 10,11 après enlèvement de la bardière 1, des convoyeurs 12,13 d'évacuation de la bardière, et enfin l'ensemble 14 découpe automatique proprement dit de la bardière.

Tous les convoyeurs sont équipés de tapis plastifiés du type alimentaire. Il y a deux paires de tapis sans fin 5,6 pour chaque rein brut avant découpe, et deux paires de tapis 8,9 pour chaque longe après enlèvement de la bardière. Les tapis d'une même paire constituant un de ces convoyeurs forment un V à environ 100 degrés dans lequel vient s'encastrer un rein brut ou une longe. Les deux paires de tapis d'amenée 5,6 des reins bruts, et de tapis d'évacuation 8,9 des longes, sont entraînés de façon synchrone par un moteur à vitesse réglable.

En amont du dispositif de coupe 14, la viande est appliquée contre les tapis 5,6 à l'aide des dispositifs de contention 7, qui sont constitués par des galets presseurs 15, cinq galets 151 à 155 par rein brut, montés chacun sur un levier articulé 16. Un vérin pneumatique 17 est associé à chaque levier 16 et permet de l'escamoter par relevage pour rendre possible l'introduction du morceau de viande, et il permet aussi d'ajuster la position du galet 15 et sa pression sur la viande pour faire face aux différentes tailles de porcs. par ailleurs, à chaque levier 16 est associé un dispositif potentiomètrique, non représenté, fournissant à une unité électronique d'asservissement électro-mécanique, non représentée, un signal électrique représentatif de la position angulaire du levier 16 par rapport à l'horizontale, et donc de la position verticale du galet 15.

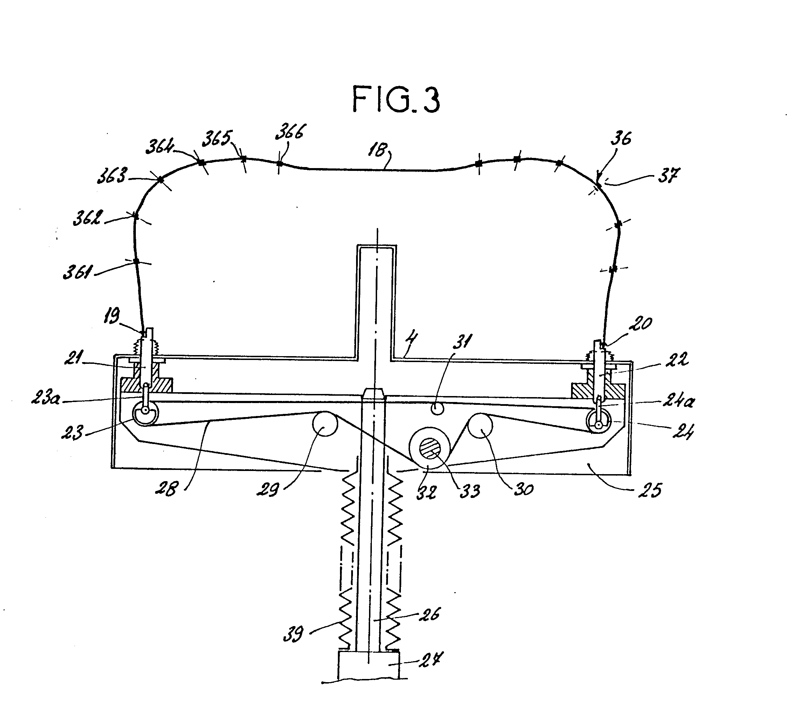

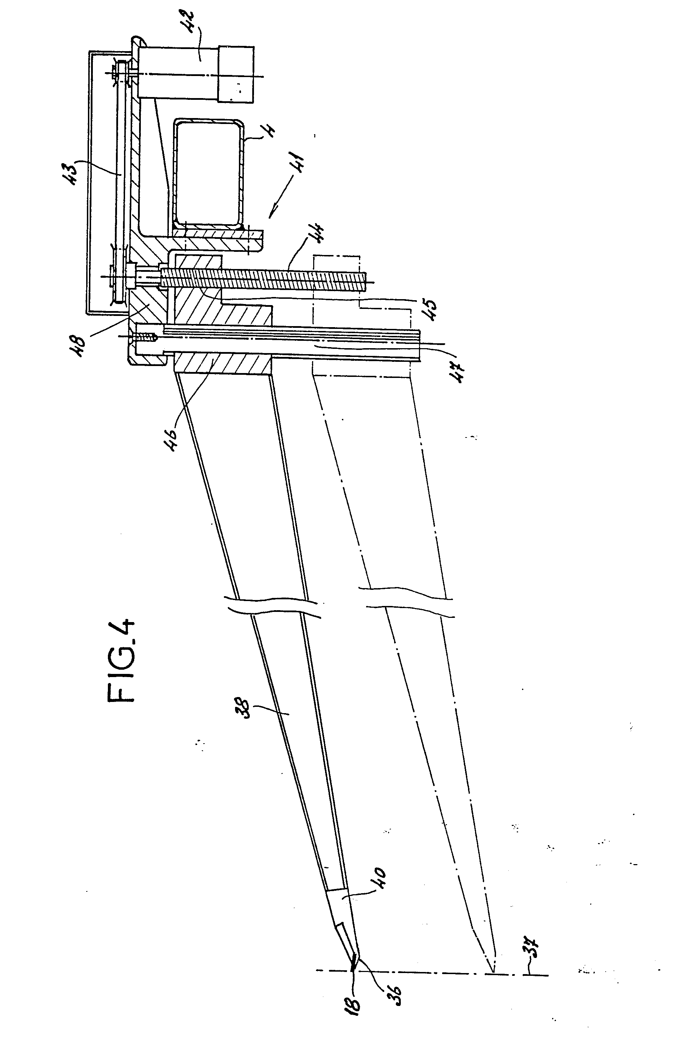

Le dispositif de coupe proprement dit 14 sera maintenant décrit en référence également aux figures 3 et 4.

La lame de coupe 18 utilisée ici est apte à découper la bardière des deux reins bruts 2,3 simultanément. Elle a une allure générale de demi-cercle, dont chaque moitié est destinée à l'enlèvement de la bardière de l'un des reins bruts, et constitué plus précisément par deux parties sensiblement en quart-de-cercle réunies par une partie sensiblement rectiligne. Dans cet exemple, la lame 18 est une lame tranchante, longiligne et souple, constituée par exemple par un ruban d'une longueur de 1400 cm, d'une épaisseur de 0,3 mm, et d'une largeur de 1 cm.

La lame de coupe 18 est animée de vibrations longitudinales par rapport à son axe. Pour ce faire, chacune de ses deux extrémités 19,20 [figure 3] est fixée respectivement sur un manchon mobile verticalement 21,22 les deux manchons étant entraînés par deux vilebrequins 23,24 en opposition de phase. Ces deux vilebrequins 23,24 tourillonnent dans des paliers d'un châssis 25 mobile verticalement le long d'un axe vertical de guidage 26 dont le pied 27 repose sur le châssis général de l'installation 4 [figure 1]. Ils sont entraînés par une courroie crantée 28, passant autour de roues dentées de renvoi 29,30,31 et d'une roue dentée d'entraînement 32, dont l'arbre 33 est lui-même entraîné par un moteur électrique 34 [figure 1] par l'intermédiaire d'une transmission flexible 35. Les vilebrequins 23,24 mis en rotation entraînent en opposition de phase les biellettes 23a,24a à l'extrémité desquelles sont articulés les machons 21,22. On obtient ainsi, pour la lame 18, une vibration longitudinale, dont la fréquence, est fixée par la vitesse de rotation du moteur d'entraînement 34.

La lame 18 en vibration coulisse longitudinalement dans douze patins 36, qui constituent des guides-supports indépendants pour la lame 18. Chaque patin 36 est réglable en position dans le plan vertical contenant la lame 18 et il peut se déplacer selon une direction radiale 37 sensiblement orthogonale à la lame en ce point, avec une course radiale d'une amplitude totale de l'ordre de 120 mm. La lame 18 est donc déformable dans le plan vertical la contenant, sous l'action des douze guides-supports indépendants 36, la courbure de la lame étant donnée par la position de chacun des guides-supports, elle-même asservie comme on le verra ci-après. Les patins guides-supports 36 sont fixés en bout de bras de support 38, au nombre de six par rein brut 2,3, et disposés angulairement tous les seize degrés. Leur déplacement s'effectue suivant des rayons qui convergent à l'intersection des tapis 5,6 et 8,9, respectivement.

La longueur utile de la lame 18 varie en fonction de la position des patins 36. De façon à obtenir une tension constante de la lame, le châssis 25 qui la supporte est mobile verticalement le long de l'axe de guidage 26, d'une part sous l'action de la gravité et d'autre part sous l'action d'un ressort de traction 39 dont le but est d'ajuster la tension obtenue. Lorsque la longueur utile de la lame 18 varie, l'ensemble d'entraînement 25 descend ou monte le long de l'axe 26, son propre poids servant de commande.

Sur la figure 4 est représenté un des bras 38 qui porte, à son extrémité libre, un des patins 36 de support et de guidage de la lame 18. L'extrémité aval 40 du bras 38 porte, en plus de patins de guidage 36, un capteur, électrique ou optique, non représenté, de l'interface gras-maigre de la viande.

Comme indiqué précédemment, les patins 36 doivent pouvoir se déplace selon une droite 37 qui est orthogonale au quart de cercle que définit grosso modo la lame 18 du côté où se trouvent ces patins, cette droite étant impérativement dans le plan vertical contenant la lame 18. Dans ce but, le déplacement linéaire de chaque bras 38 est obtenu par un dispositif 41 de déplacement à coulisse parallèle au plan de la lame, représenté figure 4, qui dans cet exemple est un dispositif du genre vis-écrou.

Un moteur 42, fixé à un châssis 48 vissé sur le châssis 4, entraîne en rotation par une courroie crantée 43 une vis sans fin 44, libre en rotation mais bloquée en translation. La vis 44 est en prise dans un trou taraudé 45 d'une pièce 46 de support du bras 38. La pièce 46 est bloquée en rotation, mais non en translation, et peut coulisser le long d'un guide 47 parallèle à la direction 37. En entraînant en rotation le moteur 42 dans un sens ou dans l'autre, on fait tourner, dans un sens ou dans l'autre, la vis sans fin 44, ce qui provoque la descente ou la montée du bras 38, les patins 36, et donc lalame 18 en ce point, parcourant la droite 37.

Les capteurs d'interface gras-maigre, ainsi que les moteurs 42, sont reliés à l'unité électronique de commande de l'ensemble de la machine.

Le fonctionnement de l'installation qui vient d'être décrite est le suivant :

Les deux reins bruts de porc 2,3 sont placés sur les deux convoyeurs d'entrée à chacun deux tapis 5,6, soit manuellement, soit par un dispositif d'approvisionnement automatique. En amont de la lame de coupe 18, les deux reins bruts sont pressés contre les tapis 5,6 au moyen des galets 15 dont chaque bras 16 est associé à un capteur potentiométrique fournissant au bloc électronique de commande la valeur de son inclinaison par rapport à l'horizontale : la position de chacun de ces galets, par exemple 151 à 155 pour la pièce de viande 3, donne une indication représentative, à cet endroit, du pourtour du rein brut.

Le signal fourni par le capteur proteniométrique associé au galet 151 sert à effectuer par recopie un prépositionnement des deux premiers patins 361 et 362 [figure 3] : ce prépositionnement est obtenu en retranchant une valuer constante, ajustable en fonction de l'épaisseur moyenne de la bardière 1 des porcs traités, de l'indication d'épaisseur fournie par les capteurs potentiométriques. Cette valeur constante est telle qu'elle vienne positionner les patins sur une interface gras-maigre théorique, très proche de la valeur réelle, mais telle que ce positionnement, donc l'entame, se fasse toujours dans le maigre du porc. De même, le galet 152 commande le prépositionnement du troisième patin 363, le galet 153 celui du quatrième patin, et ainsi de suite. Cette recopie est réalisée pendant un temps prédéterminé, suffisant pour permettre aux reins bruts 2,3 d'effectuer sur leurs convoyeurs le parcours séparant les galets 15 de la lame de coupe 18.

Dès que les reins bruts arrivent à hauteur de la lame, ce que détecte un dispositif à cellules photoélectriques par exemple, les informations fournies par les capteurs d'interface gras-maigre en bout des bras 38 prennent le relais de celles déduites de la position des galets 15, de sorte que les patins 36 viennent déformer la lame 18 pour lui faire suivre rigoureusement l'interface gras-maigre, entraînant l'enlèvement précis de la bardière 1.

Par exception, afin d'éviter de voir la lame toucher l'os à l'endroit de l'échine, le capteur associé au patin 366 situé à l'endroit de l'échine ne commande que le relevage de celui-ci lorsqu'il détecte la présence de maigre. En l'absence de détection de maigre, sa position est asservie à celle du galet presseur correspondant 155, c'est-à-dire que l'épaisseur de bardière enlevée à cet endroit est égale à la valeur constante prédéterminée, citée ci-dessus : le galet 155 prend donc le relais lorsque l'on est revenu dans le gras.

Par ailleurs, afin d'éviter de pénétrer dans les inclusions de gras ou sous la grillade, le déplacement de chaque patin 36 est assujetti d'une loi de pondération de ce déplacement par rapport à ses deux voisins.

Le sixième patin 366 est lui, comme indiqué ci-dessus, asservi en position sur le galet de contention 155, et le premier patin 361, n'ayant qu'un seul voisin 362, est assujetti d'une loi de pondération de son déplacement par rapport à ce dernier.

Bien évidemment, le moteur 34 entraîne en vibrations la lame de coupe au moins pendant toute la durée de la découpe.

Pendant la découpe, la bardière est extraite par des courroies motorisées 12 munies de dents permettant d'aggriper la bardière et de l'acheminer vers un convoyeur d'évacuation 13.

Les deux longes 10,11, débarrassées de leur bardière, sont évacuées sur les tapis sans fin 8,9.

L'invention n'est bien évidemment pas limitée à l'exemple de réalisation qui vient d'être décrit, ni au domaine d'application de l'enlèvement de la bardière d'un ou plusieurs reins bruts de porcs. Elle s'applique, d'une manière générale, à la coupe gauche de matériaux mous : coupe en forme de mousse, tonte des animaux, ainsi qu'au suivi de surface pour polissage

La lame de coupe 18 peut aussi être une lame sans fin qui passe autour d'au moins un tambour, ou poulie, de renvoi. Si ce tambour, ou poulie est unique, il sert aussi de dispositif rotatif d'entraînement de la lame sans-fin, mais, de toutes façons, il est libre de se déplacer, par exemple verticalement sous l'effet de son propre poids, de façon à tendre la lame de coupe, et lui permettre ainsi de suivre et compenser les déplacements éventuels des guides-supports.

### Revendications

1.- Outil de coupe ou de polissage apte à se conformer au profil d'une section droite, du type comportant un organe de coupe ou polissage longiligne et souple (18), cet organe longiligne et souple (18) étant tenu par au moins un guide-support (36), dont la position est réglable dans le plan de la section droite considérée et dans une direction (37) sensiblement normale au profil de cette section, et est déterminée par un organe de commande (42), caractérisé en ce que cet organe longiligne (18) est libre de se déplacer pour suivre et compenser les déplacements éventuels du ou des guides-supports (361,362,363, ..., 366, ...), des moyens (25,39) étant prévus pour exercer une tension constante sur cet organe longiligne (18).

2.- Outil selon la revendication 1, caractérisé en ce que l'organe longiligne est un organe sans fin passant autour d'au moins un tambour, ou poulie, de renvoi, ce tambour ou poulie étant libre de se déplacer pour que l'organe longiligne suive et compense les déplacements éventuels du ou des guides-supports.

3.- Outil selon la revendication 1, caractérisé en ce que l'organe longiligne possède deux extrémités et est tenu par au moins un support d'extrémité (19,20), au moins l'autre extrémité étant libre de se déplacer pour suivre et compenser les déplacements éventuels du ou des guides-supports (361,362,...366,...).

4.- Outil selon la revendication 3, caractérisé en ce que l'organe longiligne (18) est animé d'oscillations produites par deux supports d'extrémités (21,22), un au moins de ces supports étant mobile dans une direction pour exercer une force de tension sur l'organe longiligne (18).

5.- Outil selon la revendication 4, caractérisé en ce que chaque extrémité (19,20) de l'organe longiligne (18) est engagée dans l'un de deux manchons (21,22) vibrant en opposition de phase l'un par rapport à l'autre et portés par un même support (25) mobile verticalement et rappelé vers le bas par son propre poids.

6.- Outil selon la revendication 5, caractérisé en ce que le support (25) est en outre soumis à l'action d'un ressort (39) de réglage de la tension obtenue.

7.- Outil selon l'une des revendications 3 à 6, appliqué à l'enlèvement de la bardière d'un ou plusieurs reins bruts de porc, l'organe longiligne étant une lame de coupe (18) destinée à l'enlèvement de la bardière (1) du ou des deux reins bruts (2,3), caractérisé en ce que le profil exact de la lame (18) est donné par plusieurs guides-supports (361,362,363,...) qui sont chacun associés à un organe (151,152,...) de commande de prépositionnement, au moins un d'entre eux étant en outre associé à un organe de commande de positionnement par détection de l'interface maigre-gras.

8.- Outil selon la revendication 7, appliqué à l'enlèvement simultané des deux reins bruts d'un même porc, caractérisé en ce que la lame de coupe (18) a une allure générale de demi-cercle dont chaque moitié est destinée à l'enlèvement de la bardière de l'un de ces deux reins bruts.

9.- Outil selon la revendication 7 ou la revendication 8, caractérisé en ce que l'organe de positionnement comporte un capteur d'interface maigre-gras situé à proximité immédiate du guide-support (36).

10.- Outil selon l'une des revendications 7 à 9, caractérisé en ce que la commande de prépositionnement d'au moins un guide-support est telle que la lame de coupe réalise l'entame dans le maigre de la viande, son organe de commande de positionnement prenant alors le relais de l'organe de commande de prépositionnement.

11.- Outil selon la revendication 9, caractérisé en ce que l'organe de commande de positionnement du guide-support (366) situé au-dessus de l'échine ne commande que la remontée de la lame (18), son organe de commande de prépositionnement (155) prenant le relais lorsque l'on est revenu dans le gras.

12.- Outil selon l'une des revendications 1 à 11, comportant une pluralité de guides-supports (36), caractérisé en ce que chaque guide-support est assujetti à une loi de pondération de son déplacement par rapport à son ou ses voisin(s).

13.- Machine de découpe automatique de la bardière d'une ou plusieurs reins bruts de porcs, comportant au moins un convoyeur (5,6) d'amenée des reins bruts, des dispositifs (7) de contention de ces reins bruts, et un ensemble (14) de découpe de la bardière, caractérisée en ce que cet ensemble de découpe est équipé d'un outil selon l'une des revendications 1 à 12.

0267131

# FIG.1

0267131

FIG.2

# FIG.3

FIG. 4

Office européen
des brevets

**RAPPORT DE RECHERCHE EUROPEENNE**

Numero de la demande

EP 87 42 0295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 849 259 (HULBERT) <br> * En entier * <br> --- | 1,2 | B 26 D 3/28 // <br> A 22 C 25/17 <br> A 22 B 5/20 |
| X | FR-A-2 080 667 (NOORDENBOS) <br> * En entier * | 1,3,13 | |
| Y | | 7 | |
| | --- | | |
| Y | DE-A-2 421 339 (CHIRON) <br> * En entier * <br> --- | 7 | |
| X | DE-A-1 807 804 (SCHÄFTER) <br> * En entier * <br> --- | 1,4,5 | |
| A | US-A-3 849 836 (BERNARD) <br> --- | | |
| A | FR-A-1 327 175 (ETABLISSEMENTS NICOLLE) <br> ----- | | |

| DOMAINES TECHNIQUES RECHERCHES (Int. Cl.4) |
|---|
| B 26 D <br> A 22 B <br> A 22 C |

**Le présent rapport a été établi pour toutes les revendications**

| Lieu de la recherche | Date d'achèvement de la recherche | Examinateur |
|---|---|---|
| LA HAYE | 28-01-1988 | BERGHMANS H.F. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)